# EUROPÄISCHE PATENTSCHRIFT

(11) **EP 1 683 687 B1**
(45) Veröffentlichungstag und Bekanntmachung des Hinweises auf die Patenterteilung: **27.02.2008**
(21) Anmeldenummer: 06001215.0
(22) Anmeldetag: 20.01.2006
(51) Int. Cl.: B60R 21/16

(54) **Gassackmodul für ein Fahrzeuginsassen-Rückhaltesystem**
Airbag for an occupant restraint system
Sac gonflable pour un système de retenue de passager de véhicule automobile

(30) Priorität: 20.01.2005 DE 202005000924 U
(43) Veröffentlichungstag der Anmeldung: 26.07.2006
(60) Teilanmeldung: 07022938.0
(73) Patentinhaber: TRW Automotive Safety Systems GmbH, 63743 Aschaffenburg (DE)
(72) Erfinder: Keutz, Markus, 64380 Rossdorf (DE); Deckenhoff, Michael, 48249 Dülmen (DE); Helmstetter, Matthias, 63743 Aschaffenburg (DE)
(74) Vertreter: Strass, Jürgen

(56) Entgegenhaltungen:
- EP-A- 0 638 466
- WO-A-20/04045919
- GB-A- 2 306 409
- US-A- 5 518 269
- US-A1- 2004 056 459
- US-B1- 6 705 642
- US-B1- 6 811 183

## Beschreibung

Die Erfindung betrifft ein Gassackmodul für ein Fahrzeuginsassen-Rückhaltesystem gemäß dem Oberbegriff des Anspruchs 1.

Ein Gassackmodul, bei dem ein Abströmbereich in der Gassackwand geöffnet werden kann, wenn eine Verringerung des Gassackinnendrucks erwünscht ist, ist aus der WO-A-2004/045919 bekannt. Eine pyrotechnische Ladung in Form einer Sprengschnur ist direkt auf dem Abströmbereich angebracht, so daß der Abströmbereich nach Zündung der Sprengschnur durchbrennt oder mechanisch aufgerissen wird.

Sprengschnüre zur Erzeugung von Abströmöffnungen werden auch bei dem aus der GB-A-2 329 364 bekannten Gassackmodul verwendet. Hier werden bestimmte Bereiche eines Reaktionsbehälters, eines Manifolds oder eines Gasgenerators durchgebrannt.

Bei dem in der GB-A-2 306 409 gezeigten Gassackmodul ist eine Abströmöffnung des Gassacks durch eine Scheibe verschlossen. Eine auf der Scheibe angeordnete pyrotechnische Ladung brennt einen geschwächten Abschnitt der Scheibe durch, so daß eine Klappe gebildet wird. Die Klappe kann sich durch den Gassackinnendruck öffnen und die Abströmöffnung freigeben.

Die DE-A-102 21 659 zeigt ein Gassackmodul, bei dem eine Abströmöffnung gebildet wird, nachdem der Gassack seine Schutzfunktion erfüllt hat. Die Abströmöffnung wird dadurch erzeugt, daß ein Bereich des Gassackgewebes durch Erhitzen eines Glühdrahts geschmolzen wird.

Ein Gassackmodul mit den Merkmalen des Oberbegriffs des Anspruchs 1 ist aus der US 2004/0056459 A1 bekannt. Bei diesem Gassackmodul wird eine Abströmöffnung durch Aufschmelzen oder Erweichen einer Membran mittels eines Heizelements oder -mechanismus bereitgestellt.

Weitere Gassackmodule, bei denen eine Abströmöffnung durch Materialumwandlung eines energetischen Elements bereitgestellt wird, sind in der EP 0 638 466 A1, der US 5 518 269 A (jeweils Schmelzen und/oder Verbrennen eines Gewebeteils durch das erzeugte heiße Gas), der US 6 705 642 B1 (Schmelzen oder Verdampfen eines Verschlußelements) und der US 6 811 183 B1 (Abbrennen einer explosiven Beschichtung) gezeigt.

Die Erfindung macht ein flexibles, zusammen mit der Gassachwand verformbares energetisches Element verfügbar, mit dem eine Abströmöffnung bereitgestellt wird.

Gemäß der Erfindung ist bei einem Gassackmodul der eingangs genannten Art vorgesehen, daß das energetische Element ein Gewebeteil ist.

Die Bereitstellung einer Abströmöffnung im Sinne der Erfindung beinhaltet die primäre Erzeugung einer Abströmöffnung oder die Freigabe oder Vergrößerung einer bereits vorhandenen Abströmöffnung in der Gassackwand oder in einem festen Bauteil des Gassackmoduls (Gehäuse, Gasgenerator, Abdeckkappe etc.). Unter einem energetischen Element ist ein aktivierbares, energiefreisetzendes Gewebeteil zu verstehen, das sich nach seiner Aktivierung (Zünden, Anzünden, Initiieren) selbst durch Detonation, Abbrennen, Schmelzen oder dergleichen umwandelt (und ggf. auch benachbartes Material zerstört oder schädigt), um so eine Abströmöffnung zu erzeugen, freizulegen oder zu vergrößern.

Vorteilhafte und zweckmäßige Ausgestaltungen des erfindungsgemäßen Gassackmoduls ergeben sich aus den Unteransprüchen.

Die Erfindung wird nachfolgend anhand von beispielhaften Ausführungsformen unter Bezugnahme auf die beigefügten Zeichnungen beschrieben. In den Zeichnungen zeigen schematisch:
Figur 1 ein erfindungsgemäßes Gassackmodul mit einem entfalteten Gassack im Belastungsfall;
Figuren 2 und 3 nicht-erfindungsgemäße Ausführungsformen der Abströmeinrichtung; und Figuren 4 und 5 erfindungsgemäße Ausführungsformen der Abströmeinrichtung.

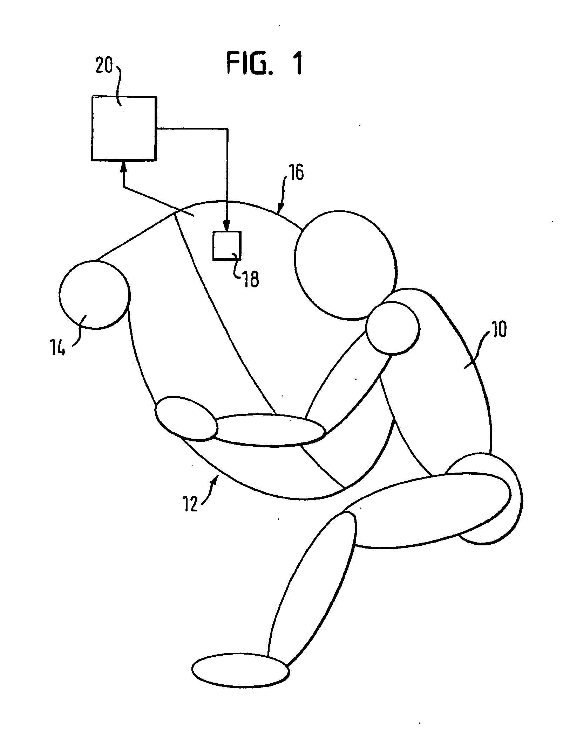

In Fig. 1 ist ein Fahrzeuginsasse 10 dargestellt, der in einen aufgeblasenen Gassack 12 eines Fahrzeuginsassen-Rückhaltesystems eintaucht. Der Gassack 12, der sich aus dem Gehäuse eines Gassackmoduls 14 heraus entfaltet hat, hat eine Gassackwand 16, an der eine elektrisch ansteuerbare Abströmeinrichtung 18 angeordnet ist. Die Abströmeinrichtung 18 dient zur selektiven Bereitstellung einer Abströmöffnung, durch die Gas aus dem Gassack 12 entweichen kann. Die Abströmeinrichtung 18 weist ein energetisches Element auf, das direkt oder indirekt mit einer elektronischen Steuerung 20 verbunden ist, d.h. das energetische Element 18 ist durch die elektronische Steuerung 20 aktivierbar.

Bei der nachfolgendenBeschreibung Beispielhafter nicht-erfindungsgemäßer und erfindungsgemäßer Ausführungsformen werden für funktionsgleiche oder -ähnliche Teile die gleichen Bezugszeichen verwendet.

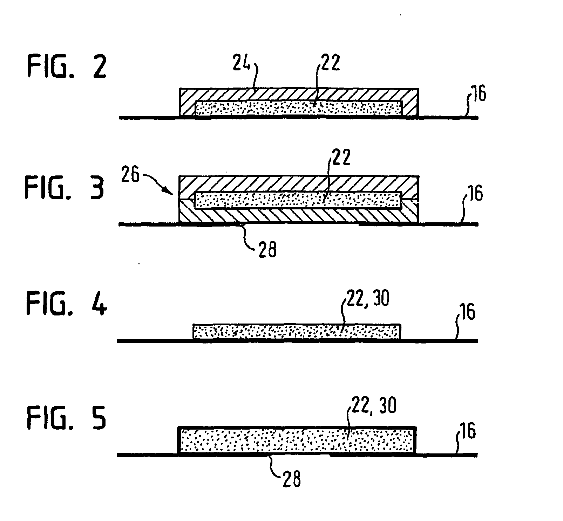

Fig. 2 zeigt den prinzipiellen Aufbau einer nicht-erfindungsgemäßen Abströmeinrichtung 18. An einer geeigneten Stelle ist unmittelbar auf der Gassackwand 16 ein energetisches Element 22 in Form eines explosiven, pyrotechnischen (brennbaren), oder mit hoher Geschwindigkeit schmelzenden Materials aufgebracht, das von einer Schutzschicht 24 abgedeckt ist. Die Schutzschicht 24 kann z.B. ein an seinem Rand mit der Gassackwand 16 vernähter Gewebelappen oder eine unmittelbar auf dem energetischen Element 22 aufgebrachte Beschichtung sein. Als energetisches Element 22 kann auch eine Zündpille oder dergleichen verwendet werden. Die elektrische Zuleitung, über die die Abströmeinrichtung mit der elektronischen Steuerung 20 verbunden ist, ist hier nicht dargestellt.

Bei Aktivierung der Abströmeinrichtung 18 wird das energetische Element 22 gezündet, angezündet bzw. initiiert, was zu einer Schädigung oder sofortigen Zerstörung der benachbarten Gassackwand 16 durch (Auf-)Sprengen, Verbrennen oder Schmelzen führt. Auf diese Weise wird eine Abströmöffnung in der Gassackwand 16 geschaffen, durch die Gas aus dem Gassack 12 austreten kann.

Bei der in Fig. 3 gezeigten Variante ist das energetische Element 22 Teil einer vorkonfektionierten Einheit 26, die auf der Gassackwand 16 in geeigneter Weise befestigt ist, z.B. durch Einnähen oder Kleben. Die vorkonfektionierte Einheit 26 kann z.B. ein Gewebeteil, ein Kunststoff-/Silikon-Teil oder eine Folie umfassen, in das bzw. die ein energetisches Element 22 integriert ist. Die vorkonfektionierte Einheit 26 ist so angeordnet, daß sie eine bereits in der Gassackwand 16 vorhandene Abströmöffnung 28 zumindest teilweise überdeckt. In diesem Fall wird durch die Aktivierung der Abströmeinrichtung 18 insbesondere der die Abströmöffnung 28 überdeckende Teil der vorkonfektionierten Einheit 26 soweit geschädigt oder zerstört, daß dadurch die Abströmöffnung 28 zumindest teilweise freigegeben wird.

Fig. 4 zeigt eine erfindungsgemäße Ausführungsform, bei der ein bestimmter Bereich der Gassackwand 16 aus einem besonderen Gewebeteil 30 gebildet ist. Das Gewebeteil 30, das bei dieser Ausführungsform das energetische Element 22 darstellt, besteht aus einem explosiven oder brennbaren Material, z.B. einem Salpetersäureester eines Gewebematerials. So kann durch Zünden bzw. Anzünden des Gewebeteils 30 unmittelbar eine Abströmöffnung in der Gassackwand 16 erzeugt werden.

Bei der in Fig. 5 gezeigten Variante ist, ähnlich wie bei der Variante der Fig. 3, bereits eine Abströmöffnung 28 in der Gassackwand 16 gebildet. Die Abströmöffnung 28 ist durch ein separates, in geeigneter Weise auf der Gassackwand 16 befestigtes Gewebeteil 30 mit den zuvor beschriebenen Eigenschaften überdeckt. Die Zerstörung des Gewebeteils 30 durch Detonation bzw. Verbrennen legt die Abströmöffnung 28 frei.

Die beschriebenen Maßnahmen zur selektiven Bereitstellung einer Abströmöffnung bzw. Einzelheiten dieser Maßnahmen sind im Ermessen des Fachmanns auch untereinander kombinierbar.

## Patentansprüche

1. Gassackmodul für ein Fahrzeuginsassen-Rückhaltesystem mit einem Gehäuse, einem im Gehäuse untergebrachten Gassack (12), der eine Gassackwand (16) aufweist, und einer Abströmeinrichtung (18), die ein über eine Steuereinheit (20) aktivierbares energetisches Element (22) zur selektiven Bereitstellung einer Abströmöffnung aufweist, wobei die Abströmöffnung durch Materialumwandlung des energetischen Elements (22) bereitgestellt wird, **dadurch gekennzeichnet, daß** das energetische Element (22) ein Gewebeteil (30) ist.

2. Gassackmodul nach Anspruch 1, **dadurch gekennzeichnet, daß** das Gewebeteil (30) aus einem explosiven oder brennbaren Material besteht.

3. Gassackmodul nach Anspruch 2, **dadurch gekennzeichnet, daß** das energetische Gewebeteil (30) einen Salpetersäureester eines Gewebematerials umfaßt.

4. Gassackmodul nach einem der vorhergehenden Ansprüche, **dadurch gekennzeichnet, daß** das energetische Element (22) unmittelbar auf der Gassackwand (16) aufgebracht ist.

5. Gassackmodul nach einem der Ansprüche 1 bis 3, **dadurch gekennzeichnet, daß** das energetische Element (22) Teil der Gassackwand (16) ist.

## Claims

1. A gas bag module for a vehicle occupant restraint system, comprising a housing, a gas bag (12) housed in the housing and having a gas bag wall (16), and a discharge arrangement (18) including an energetic element (22) which is adapted to be activated by a control unit (20), for the selective provision of a discharge opening, the discharge opening being provided by material conversion of the energetic element (22), **characterized in that** the energetic element (22) is a fabric piece (30).

2. The gas bag module according to claim 1, **characterized in that** the fabric piece (30) consists of an explosive or combustible material.

3. The gas bag module according to claim 2, **characterized in that** the energetic fabric piece (30) comprises a nitric acid ester of a fabric material.

4. The gas bag module according to any of the preceding claims, **characterized in that** the energetic element (22) is applied directly on the gas bag wall (16).

5. The gas bag module according to any of claims 1 to 3, **characterized in that** the energetic element (22) is part of the gas bag wall (16).

## Revendications

1. Module de coussin à gaz pour un système de retenue de passager de véhicule, comportant un boîtier, un coussin à gaz (12) logé dans le boîtier, lequel présente une paroi de coussin à gaz (16) et un système d'échappement (18) qui présente un élément énergétique (22) activable par l'intermédiaire d'une unité de commande (20) pour fournir sélectivement un orifice d'échappement, l'orifice d'échappement étant fourni par transformation de matériau de l'élément énergétique (22), **caractérisé en ce que** l'élément énergétique (22) est une pièce de tissu (30).

2. Module de coussin à gaz selon la revendication 1, **caractérisé en ce que** la pièce de tissu (30) est en un matériau explosif ou combustible.

3. Module de coussin à gaz selon la revendication 2, **caractérisé en ce que** la pièce ce tissu (30) énergétique comprend un ester d'acide nitrique d'un matériau de tissu.

4. Module de coussin à gaz selon l'une des revendications précédentes, **caractérisé en ce que** l'élément énergétique (22) est appliqué directement sur la paroi de coussin à gaz (16).

5. Module de l'élément énergétique (22) coussin à gaz selon l'une des revendications 1 à 3, **caractérisé en ce que** l'élément énergétique (22) fait partie de la paroi de coussin à gaz (16).
